# EUROPEAN PATENT SPECIFICATION

(11) **EP 2 171 832 B1**
(45) Date of publication and mention of the grant of the patent: **06.04.2011**
(21) Application number: 07785843.9
(22) Date of filing: 25.06.2007
(51) Int. Cl.: H02K 11/02, H02K 23/00

(54) **A DEVICE FOR NOISE SUPPRESSION OF A SMALL ELECTRIC MOTOR**
EINRICHTUNG ZUR GERÄUSCHUNTERDRÜCKUNG EINES KLEINEN ELEKTROMOTORS
DISPOSITIF POUR SUPPRIMER LE BRUIT D'UN PETIT MOTEUR ÉLECTRIQUE

(43) Date of publication of application: 07.04.2010
(73) Proprietor: Sintertechnik GmbH, 91362 Pretzfeld (DE)
(72) Inventor: LANGGUTH, Jochen, 91362 Pretzfeld (DE); LANGGUTH, Katrin, 91362 Pretzfeld (DE); WILK, Andreas, 91301 Forchheim (DE); KORSUCHIN, Valerij, 90765 Fürth (DE)
(74) Representative: Gassner, Wolfgang
(86) International application number: PCT/EP2007/005586
(87) International publication number: WO 2009/000290

(56) References cited:
- EP-A- 1 300 928
- US-A1- 2006 244 321
- US-B2- 7 019 425

## Description

The inventions relates to a device in accordance with the preamble of claim 1.

Such a device is known from U.S. Patent 7,019,425 B2. According to the disclosure of the aforementioned document there is provided a bar core inductivity being installed between each of the first electrodes of a Cₓ capacitor and a connection clamp which is provided to be connected with a power source. By the known device there can be achieved a good electromagnetic noise suppression or noise suppression, respectively, for a small electric motor. Such electric motors may be in particular part of actuators used in vehicles, aircraft and the like. However, tightened up regulations regarding the maximum tolerable noise make it necessary to further improve the noise suppression of small electric motors. At the same time there exists a need to further miniaturize electric motors and to further reduce costs.

From US 2006/0244321 A1 it is known that capacitors or choke coils can be mounted on separate mounting posts.

It is an object of the present invention to overcome disadvantages in the art. It is a further object of the invention to provide a device allowing an improved noise suppression of electric motors. A further aim of the invention is to provide a device for a noise suppression which allows a further miniaturization of an electric motor and a cost reduction.

This object is solved by the features of claim 1. Embodiments of the inventions are described by the features of claims 2 to 15.

According to the invention it is provided that a first coil having a predetermined inductivity is connected with its first connector with a first electrode of the Cₓ capacitor and wherein a second connector thereof is provided to be connected with a first brush, and wherein the first coil is wound around a first section of the disk-shaped element.

According to a feature of the invention the coil of the proposed inductivity is wound around a first section of the disk-shaped element. By this measure there can be provided a device for noise suppression which is compact and allows the production of further miniaturized electric motors. In accordance with the present invention the disk-shaped element is used to take up the first coil. Thereby one can save mounting space and costs for providing a separate core for taking up the coil. As according to the proposed invention there is provided just one inductivity the improved noise suppression can only be achieved if the electric motor is operated always in the same sense of rotation.

According to an embodiment of the invention a second coil having the predetermined inductivity is connected with its third connector with a second electrode of the Cₓ capacitor and wherein a fourth connector thereof is provided to be connected with a second brush, wherein the second coil is wound around a second section of the disk-shaped element, and wherein between the first and the second sections there is provided a third section separating the coils from each other. By the proposed embodiment there is achieved an improved noise suppression even if the electric motor is operated in both senses of rotation. In this case the disk-shaped elements act as a carrier or a core for both coils.

When using the disk-shaped element as a core for taking up the coil a large core diameter can easily be realized. With an increasing core diameter the inductivity increases. Because of that the quality of the inductivity to act as a choke can be enhanced remarkably. In order to achieve an excellent noise suppression there is provided a third section separating the coils from each other. By this measure unwanted interactions between the first and the second coil can be avoided. The first and the second electrodes may be covered at least partly by the first and the second coils. Thereby a compact arrangement can be achieved in which the coils are located close to the first and second electrodes of the Cₓ capacitor.

The first and/or the second coils may be fixed at the surface of the disk-shaped element by an adhesive. The adhesive may be made from a polymer or the like. The proposed fixing of the coils by an adhesive counteracts damages.

According to a further embodiment of the invention it is provided that the first and the second coils are arranged symmetrically. This facilitates the manufacture of the device. Further, a combination with other elements of a small electric motor is enhanced.

The disk-shaped element is designed as a ceramic multi-layer element. A suitable disk-shaped ceramic multi-layer element is for example described in U.S. Patent 7,019,925 B2.

Alternatively, the disk-shaped element is designed as a ceramic barrier-layer element. A suitable disk-shaped ceramic barrier-layer element is for example described in U.S. Patent 7,019,425 B2.

According to a further advantageous feature a first isolation path electrically separates the first and the second electrodes, and second isolation paths electrically separate the third electrode from the first and the second electrodes. The first and the second isolation paths may have the form of a "Y" or the like. The proposed design of the electrodes and the isolation paths allows for the integration of a Cₓ capacitor with a high capacity with C_{y} capacitors within one disk.

According to a further embodiment a first discrete capacitor being mounted on the disk-shaped element is switched between the first and the second electrodes. I.e. the first discrete capacitor is connected in parallel with the Cₓ capacitor. In a similar way a second discrete capacitor being mounted on the disk-shaped element may be switched between the third electrode and at least one of the first and second electrodes. Although, the second discrete capacitor is connected in parallel with the C_{y} capacitor. By the proposed features the capacity of the Cₓ and/or the C_{y} capacitors can be increased. Therewith, in dependence of the noise characteristic of the electric motor the noise can be suppressed effectively. The first and/or second discrete capacitor/s is/are SMD element/s. Such elements are available commercially at a low price. A mounting of such elements on the surface of the disk-shaped element is easy. The coefficients of expansion of the discrete capacitor, e.g. multilayer capacitor, and the disk-shaped element are very similar so that a damage of the discrete capacitors due to thermal effects is highly unlikely.

According to a further embodiment the first and second electrodes are connected with a resistor having a resistance in the range of 10 Ω to 100 kΩ. The provision of proposed resistor enhances the protection against a high voltage breakthrough through the dielectric layers.

Furthermore, the first and the second electrodes may be connected with a NTC-resistor or a VDR-device. Such elements may be produced by printing techniques, e.g. screen-printing. By providing the proposed resistor and/or other elements in particular current peaks can be compensated and the durability of the proposed device can be enhanced.

The disk-shaped element may have a central breakthrough for feeding through a shaft. This makes it possible to combine the proposed device with conventional electric motors. In particular the proposed device may be combined with an end cap of a small electric motor. In this connection it has turned out to be advantageous that the disk-shaped element covers an inner end face of the end cap. Advantageously, the disk-shaped element fully covers the inner end face. Thereby, the end cap shields against an escape of electromagnetic noise from the interior of a housing surrounding the electric motor.

According to a further embodiment of the invention there is provided a small electric motor, comprising a housing which is closed with the aforementioned end cap.

Preferred embodiments are know described by reference to the enclosed figures.
- Fig. 1: shows a plan view upon a device,
- Fig. 2: shows a sectional view through an end cap,
- Fig. 3: shows a perspective view of the end cap of Fig. 2,
- Fig. 4: shows plots of conducted emissions in dependency of the frequency for a conventional electric motor and an electric motor provided with a device according to the invention,
- Fig. 5: shows plots of radiated emissions in dependency of the frequency for a conventional electric motor and an electric motor provided with a device according to the invention and
- Fig. 6: shows a substitute circuit diagram.

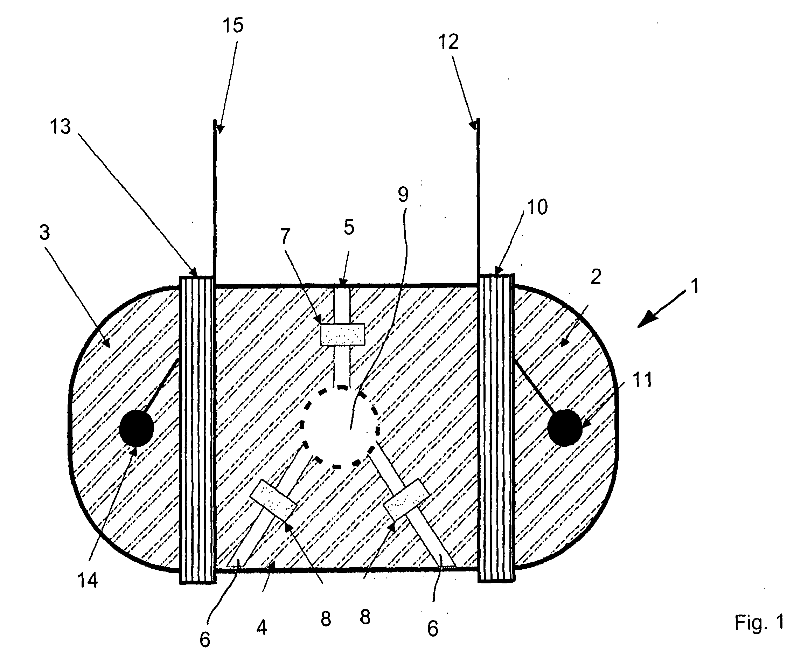

Fig. 1 shows a plan view upon a device of the invention. A disk-shaped element 1 has a more or less rectangular circumference with rounded corners. The disk-shaped element 1 is a ceramic multi-layer element or a ceramic barrier-layer capacitor in which Cₓ and C_{y} capacitors are combined. Moreover the disk-shaped elements 1 may be further comprise feedthrough capacitors C_{D}. As dielectric materials for the manufacture of the disk-shaped element 1 there can be used materials which are effective up to frequencies of 50 GHz. Suitable dielectric materials are for example materials with HDK and/or NDK properties such as for example dielectric materials like X7R, Y5V, NP0, COG as well as microwave ceramics, barium titanate, strontium titanate, calcium titanate or mixtures thereof.

Besides that the Cₓ and C_{y} capacitors can be barrier-layer capacitors being integrated within one disk. In this case, the disk-shaped element 1 may be made from a perowskite material, e.g. a mixed titanate, for example strontium titanate, barium titanate, calcium titanate or suitable mixtures thereof having a VDR characteristic. On an upper side of the disk-shaped element 1 there is provided a first electrode 2 and a second electrode 3 of a Cₓ capacitor. Reference sign 4 designs a third electrode of a C_{y} capacitor. The first 2 and the second electrode 3 are separated by a first isolation path 5 as well as by second isolation paths 6. The second isolation paths 6 separate at the same time the first 2 and the second electrode 3 from the third electrode 4. The electrodes 2, 3, 4 are preferably made from a layer of silver, copper or the like. Such a layer may be manufactured by printing techniques.

In order to increase or adjust the capacity of the Cₓ capacitor the first isolation path 5 may be bridged by a first SMD capacitor 7. In order to increase the capacity of the C_{y} capacitor in a similar way the second isolation path 6 may be bridged by second SMD capacitors 8. From the electric view point the first SMD 7 and the second SMD capacitors 8 are switched in parallel with respect to the Cₓ capacitor and the C_{y} capacitor, respectively. Reference 9 designates a central breakthrough being provided within the disk-shaped element 1. A diameter of the central breakthrough 9 is adjusted such that a shaft of the small electric motor can be conducted through it so that the shaft can freely rotate.

In a first section of the disk-shaped element 1 which is covered by the first electrode 2 there is provided a first coil 10. The first coil 10 is wound around the disk-shaped element 1. The first coil 10 is made of a wire the first end of which forms a first connector 11 which is electrically connected with the first electrode 2. A second end of the wire forms a second connector 12 which is provided to be connected with a first brush (not shown here) of the small electric motor.

Similar to the first coil 10 there is provided a second coil 13 being wound around the disk-shaped element 1 in a second section which is covered by the second electrode 3. A third connector 14 of the second coil 13 is electrically connected with the second electrode 3.

A fourth connector 15 of the second coil 13 is provided to be connected with a second brush (not shown here) of the small electric motor. The first 11 and the third connector 14 may be electrically connected with the first 2 and the second electrode 3 by conventional methods, like soldering, welding or glueing with electric conductive clue.

Besides that there may be provided a first terminal extending from the first electrode 2 and/or a second terminal extending from the second electrode 3. Such terminal/s may be in the form of a pin or the like which is mounted with electric contact on the first 2 and/or second electrode 3. The provision of such terminal/s makes it not only possible to contact the first 12 and/or third connector 14 with the first 2 or second electrode 3, respectively, but also to connect connecting wires of a power source with the first 2 and/or second electrode 3.

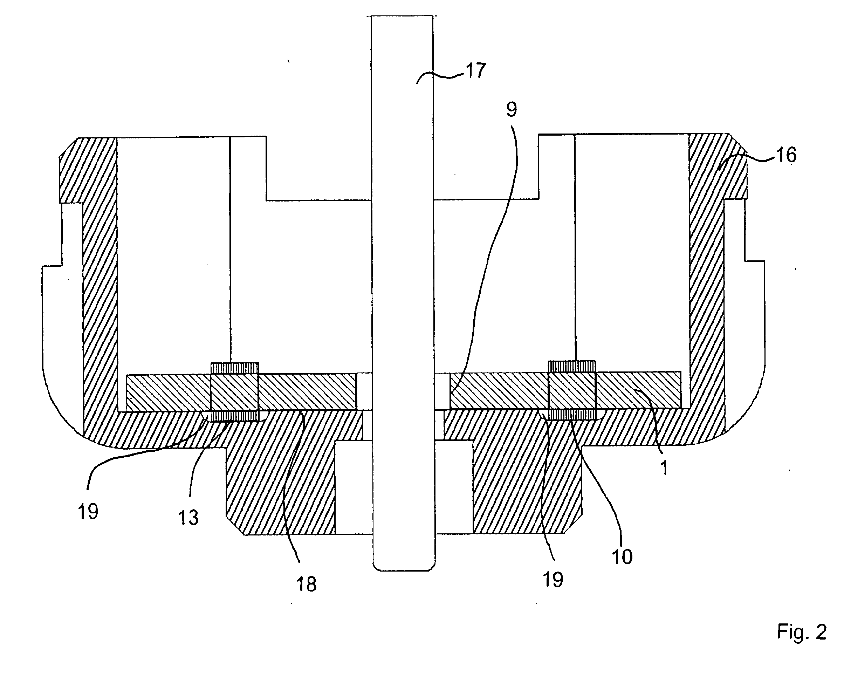

Fig. 2 shows a sectional view through an end cap 16 of a small electric motor. The end cap 16 may be made of a polymer. It may be manufactured for example by injection molding. A shaft 17 is conducted through the central breakthrough 9 of the disk-shaped element 1. An inner end face 18 of the end cap 16 is provided with recesses 19. The form of the recesses 19 corresponds to a height and a width of first 10 and second coil 13 so that the disk-shaped element 1 can be positioned with its remaining surface in direct contact on the inner end face 18. I. e. the recesses 19 form pockets for taking up a projection formed by the first 10 and second coil 13.

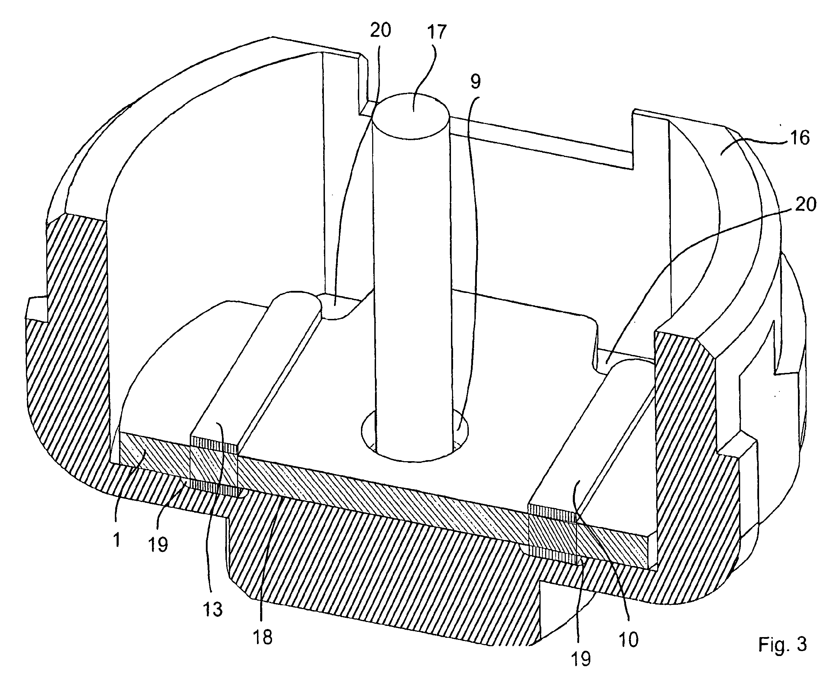

The disk-shaped element 13 shown in the embodiment of Fig. 2 and 3 has further recesses 20 in the circumference which are located within the first and/or second section around which the first 10 and second coil 13 are wound. Although not explicitly shown in Fig. 3 it has to be understood that for each coil 10, 13 there are provided two further recesses 20 in an opposite direction. The provision of the proposed further recesses 20 facilitates the manufacture of the device, i. e. the production of a winding upon the disk-shaped element.

As can further be seen from Figs. 2 and 3 the disk-shaped element essentially covers the inner end face 18 of the end cap 16. By this measure an improved shielding vis-a-vis electromagnetic noise produced by the small electric motor can be achieved.

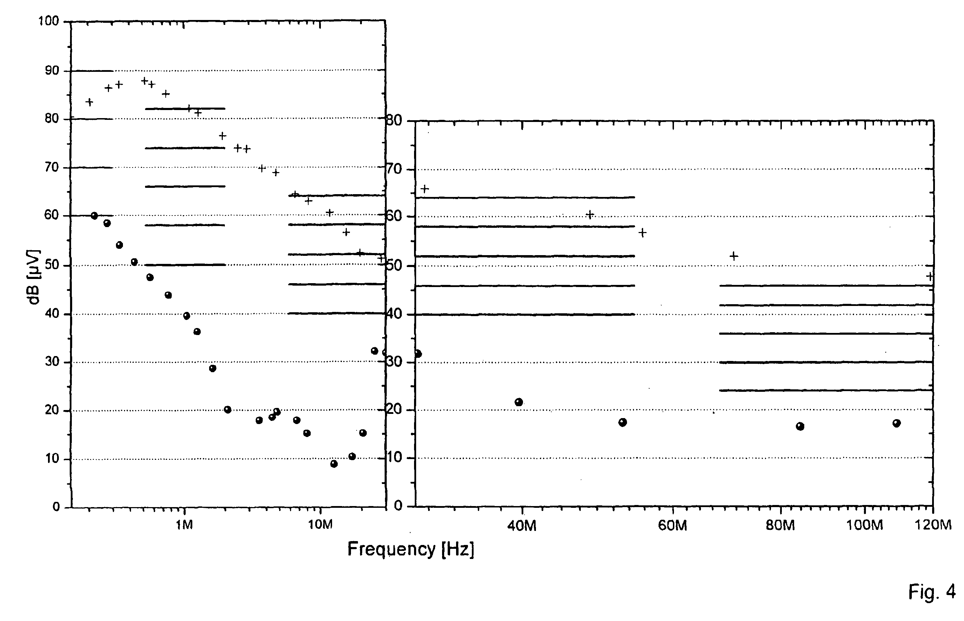

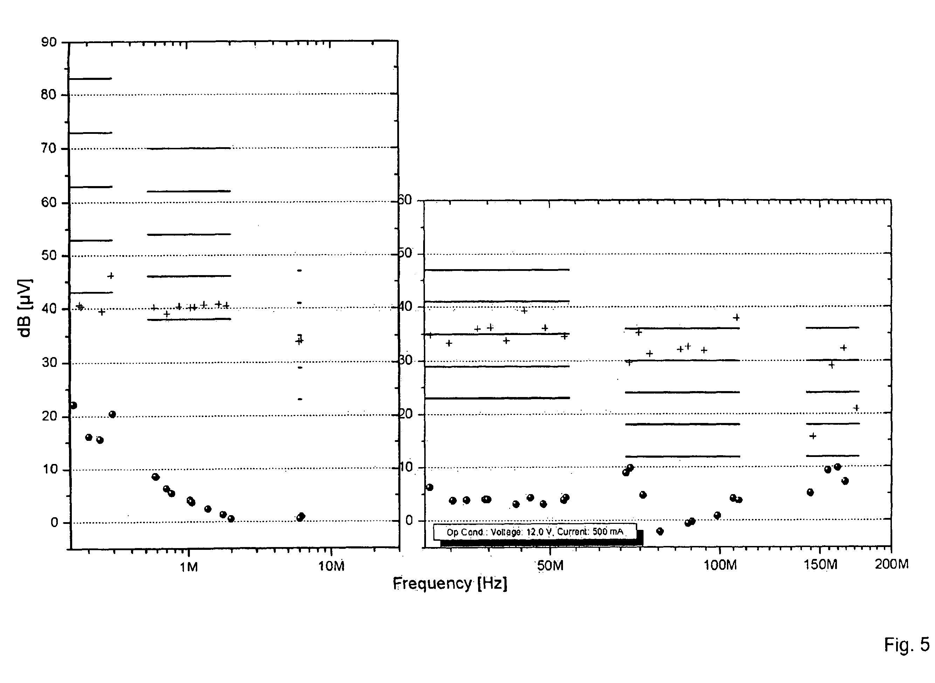

Figs. 4 and 5 show the results of measurements of electromagnetic emissions or noise of a conventional electric motor having a conventional noise suppressing VDR-device at the commutator and the same electric motor being provided with a device for noise suppression in accordance with the present invention. The values measured for the conventional electric motor are signified by "crosses", the values measured for the electric motor being provided with a device for a noise suppression in accordance with the present invention are signified by "dots". The measurements have been carried out in accordance with the norm CISPR25.

As can be seen from Figs. 4 and 5 by use of the device for noise suppression in accordance with the present invention the conducted emissions (Fig. 4), i.e. emissions which are emitted via a wire, as well as the radiated emissions (Fig. 5) are suppressed remarkably.

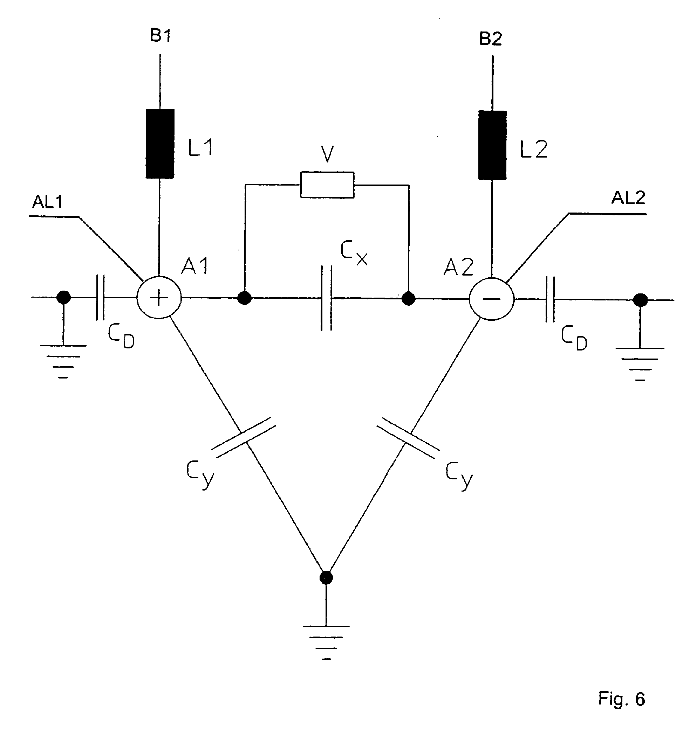

Fig. 6 shows a substitute circuit diagram of a circuit for noise suppression of a small electric motor. A Cₓ capacitor is installed between connection clamps AT1, AT2 which are used for the connection to a source of current. Further, each electrode of the Cₓ capacitor is connected via an inductivity L1, L2 with a first brush B1 and a second brush B2, by which a sliding contact to commutator is realized. Parallel to the Cₓ capacitor, a varistor V may be installed. Instead or in addition to the varistor V an ohmic resistor can also be provided or a diode. Each of the connection clamps AL1, AL2 as well as each of the inductivities L1, L2 are also connected via a C_{y} capacitor with ground. C_{D} designates a feedthrough capacitor which may be provided additionally.

### List of reference signs

- 1: disk-shaped element
- 2: first electrode
- 3: second electrode
- 4: third electrode
- 5: first isolation path
- 6: second isolation path
- 7: first SMD capacitor
- 8: second SMD capacitor
- 9: central breakthrough
- 10: first coil
- 11: first connector
- 12: second connector
- 13: second coil
- 14: third connector
- 15: fourth connector
- 16: end cap
- 17: shaft
- 18: end face
- 19: recess
- 20: further recess

- AL1: first connection clamp
- AL2: second connection clamp
- B1: first brush
- B2: second brush
- E1: first end
- E2: second end
- L1: first inductivity
- L2: second inductivity
- V: varistor

## Claims

1. A device for noise suppression of a small electric motor, the device comprising:
a disk-shaped element (1) in which at least one Cₓ capacitor and several C_{y} capacitors are combined, the disk-shaped element (1) being designed as a ceramic multi-layer element or as a ceramic barrier-layer element,
**characterized in that**
a first coil (10) having a predetermined inductivity is connected with its first connector (11) with a first electrode (2) of the Cₓ capacitor and wherein a second connector (12) thereof is provided to be connected with a first brush, and wherein the first coil (10) is wound around a first section of the disk-shaped element (1).

2. The device of claim 1, wherein a second coil (13) having the predetermined inductivity is connected with its third connector (14) with a second electrode (3) of the Cₓ capacitor and wherein a fourth connector (15) thereof is provided to be connected with a second brush, wherein the second coil (13) is wound around a second section of the disk-shaped element (1),
and wherein between the first and the second sections there is provided a third section separating the coils (10, 13) from each other.

3. The device of one of the preceding claims, wherein the first electrode (2) is at least partially covered by the first coil (10), and wherein the second electrode (3) is at least partially covered by the second coil (13).

4. The device of one of the preceding claims, wherein the first (10) and/or the second coils (13) are fixed at the surface of the disk-shaped element (1) by an adhesive.

5. The device of one of the preceding claims, wherein the first (10) and the second coils (13) are arranged symmetrically.

6. The device of one of the preceding claims, wherein a first isolation path (5) electrically separates the first (2) and the second electrodes (3), and second isolation paths (6) electrically separate a third electrode (4) of the C_{y} capacitor from the first (2) and second electrodes (3).

7. The device of one of the preceding claims, wherein a first discrete capacitor (7) being mounted on the disk-shaped element (1) is switched between the first and the second electrodes.

8. The device of one of the preceding claims, wherein a second discrete capacitor (8) being mounted on the disk-shaped element (1) is switched between the third electrode (4) and at least one of the first (2) and second electrodes (3).

9. The device of one of claims 7 or 8, wherein the first (7) and/or second discrete capacitor (8) is a SMD element.

10. The device of one of claims 2-9, wherein the first (2) and second electrodes (3) are connected with a resistor having a resistance in the range of 10 Ω to 100 kΩ.

11. The device of one of claims 2-10, wherein the first (2) and the second electrodes (3) are connected with a NTC-resistor or a VDR-device or a diode.

12. The device of one of the preceding claims, wherein the disk-shaped element (1) has a central breakthrough (9) for feeding through a shaft (17).

13. An end cap (16) for a small electric motor **characterised in that** in the end cap (16) there is mounted a device according to one of the previous claims.

14. The end cap (16) of claim 13, wherein the disk-shaped element (1) essentially covers an inner end face (18) of the end cap (16).

15. A small electric motor, comprising a housing which is closed with the end cap (16) according to one of claims 13 or 14.

## Patentansprüche

1. Vorrichtung zur Geräuschunterdrückung eines kleinen Elektromotors, wobei die Einrichtung umfasst:
ein scheibenförmiges Element (1), in welchem zumindest ein Cₓ Kondensator und mehrere C_{y} Kondensatoren zusammengefasst sind, wobei das scheibenförmige Element (1) als ein keramisches Multilayer-Element oder als ein keramisches Sperrschicht-Element ausgeführt ist,
**dadurch gekennzeichnet, dass**
eine erste Spule (10) mit einer vorgegebenen Induktivität mit ihrem ersten Anschluss (11) mit einer ersten Elektrode (2) des Cₓ Kondensators verbunden ist, und wobei ein zweiter Anschluss (12) davon vorgesehen ist, um mit einer ersten Bürste verbunden zu sein, und wobei die erste Spule (10) um einen ersten Abschnitt des scheibenförmigen Elements (1) herum gewunden ist.

2. Vorrichtung nach Anspruch 1, wobei eine zweite Spule (13) mit einer vorgegebenen Induktivität mit ihrem dritten Anschluss (14) mit einer zweiten Elektrode (3) des Cₓ Kondensators verbunden ist, und wobei ein vierter Anschluss (15) davon vorgesehen ist, um mit einer zweiten Bürste verbunden zu sein, wobei die zweite Spule (13) um einen zweiten Abschnitt des scheibenförmigen Elements (1) herum gewunden ist,
und wobei zwischen dem ersten und dem zweiten Abschnitt ein dritter Abschnitt vorgesehen ist, welcher die Spulen (10, 13) voneinander trennt.

3. Vorrichtung nach einem der vorhergehenden Ansprüche, wobei die erste Elektrode (2) zumindest teilweise durch die erste Spule (10) bedeckt ist, und wobei die zweite Elektrode (3) zumindest teilweise durch die zweite Spule (13) bedeckt ist.

4. Vorrichtung nach einem der vorhergehenden Ansprüche, wobei die erste (10) und/oder die zweite Spule (13) an der Oberfläche des scheibenförmigen Elements (1) durch einen Klebstoff befestigt ist.

5. Vorrichtung nach einem der vorhergehenden Ansprüche, wobei die erste (10) und die zweite Spule (13) symmetrisch angeordnet sind.

6. Vorrichtung nach einem der vorhergehenden Ansprüche, wobei ein erster Isolierpfad (5) elektrisch die erste (2) und die zweite Elektrode (3) trennt, und zweite Isolierpfade (6) elektrisch eine dritte Elektrode (4) des C_{y} Kondensators von der ersten (2) und zweiten Elektrode (3) trennen.

7. Vorrichtung nach einem der vorhergehenden Ansprüche, wobei ein erster diskreter Kondensator (7), welcher auf dem scheibenförmigen Element (1) montiert ist, zwischen die erste und die zweite Elektrode geschaltet ist.

8. Vorrichtung nach einem der vorhergehenden Ansprüche, wobei ein zweiter diskreter Kondensator (8), welcher auf dem scheibenförmigen Element (1) montiert ist, zwischen die dritten Elektrode (4) und zumindest eine der ersten (2) und der zweiten Elektrode (3) geschaltet ist.

9. Vorrichtung nach einem der Ansprüche 7 oder 8, wobei der erste (7) und/oder zweite diskrete Kondensator (8) ein SMD-Bauelement ist.

10. Vorrichtung nach einem der Ansprüche 2 bis 9, wobei die erste (2) und die zweite Elektrode (3) mit einem Widerstand verbunden sind, welcher einen Widerstand im Bereich von 10 Ω bis 100 kΩ aufweist.

11. Vorrichtung nach einem der Ansprüche 2 bis 10, wobei die erste (2) und die zweite Elektrode (3) mit einem NTC-Widerstand oder einer VDR-Einrichtung oder einer Diode verbunden sind.

12. Vorrichtung nach einem der vorhergehenden Ansprüche, wobei das scheibenförmige Element (1) einen zentralen Durchbruch (9) zum Hindurchführen einer Welle (17) aufweist.

13. Endkappe (16) für einen kleinen Elektromotor, **dadurch gekennzeichnet, dass** in der Endkappe (16) eine Vorrichtung nach einem der vorhergehenden Ansprüche montiert ist.

14. Endkappe (16) nach Anspruch 13, wobei das scheibenförmige Element (1) im Wesentlichen eine innere Endfläche (18) der Endkappe (16) bedeckt.

15. Kleiner Elektromotor, umfassend ein Gehäuse, welches mit der Endkappe (16) nach einem der Ansprüche 13 oder 14 verschlossen ist.

## Revendications

1. Dispositif de suppression de bruit d'un petit moteur électrique, le dispositif comprenant :
un élément en forme de disque (1) dans lequel au moins un condensateur Cₓ et plusieurs condensateurs C_{y} sont combinés, l'élément en forme de disque (1) étant réalisé sous forme d'élément multi couches céramique ou sous forme d'élément couche barrière céramique,
**caractérisé en ce que**
une première bobine (10) ayant une inductivité prédéfinie est connectée à son premier connecteur (11) avec une première électrode (2) du condensateur Cₓ et où un deuxième connecteur (12) de celle-ci est prévu pour être connecté à un premier balai, et où la première bobine (10) est enroulée autour d'une première section de l'élément en forme de disque (1).

2. Dispositif selon la revendication 1, où une deuxième bobine (13) ayant l'inductivité prédéfinie est connectée à son troisième connecteur (14) avec une deuxième électrode (3) du condensateur Cₓ et où un quatrième connecteur (15) de celle-ci est prévu pour être connecté à un second balai, où la deuxième bobine (13) est enroulée autour d'une deuxième section de l'élément en forme de disque (1),
et où entre la première et la deuxième sections y est prévue une troisième section séparant les bobines (10, 13) les unes des autres.

3. Dispositif selon l'une des revendications précédentes, où la première électrode (2) est au moins partiellement recouverte par la première bobine (10), et où la deuxième électrode (3) est au moins partiellement recouverte par la deuxième bobine (13).

4. Dispositif selon l'une des revendications précédentes, où la première (10) et/ou la deuxième bobines (13) sont fixées sur la surface de l'élément en forme de disque (1) au moyen d'un adhésif.

5. Dispositif selon l'une des revendications précédentes, où la première (10) et la deuxième bobines (13) sont disposées symétriquement.

6. Dispositif selon l'une des revendications précédentes, où un premier chemin d'isolation (5) sépare électriquement la première (2) et la deuxième électrodes (3), et des deuxièmes chemins d'isolation (6) séparent électriquement une troisième électrode (4) du condensateur C_{y} de la première (2) et de la deuxième électrodes (3).

7. Dispositif selon l'une des revendications précédentes, où un premier condensateur discret (7) étant monté sur l'élément en forme de disque (1) est commuté entre la première et la deuxième électrodes.

8. Dispositif selon l'une des revendications précédentes, où un second condensateur discret (8) étant monté sur l'élément en forme de disque (1) est commuté entre la troisième électrode (4) et au moins la première (2) ou la deuxième électrode (3).

9. Dispositif selon l'une des revendications 7 ou 8, où le premier (7) et/ou le second condensateur discret (8) est un élément CMS.

10. Dispositif selon l'une des revendications 2 à 9, où la première (2) et la deuxième électrodes (3) sont connectées à une résistance ayant une résistance comprise dans la plage de 10 Ω à 100 kΩ.

11. Dispositif selon l'une des revendications 2 à 10, où la première (2) et la deuxième électrodes (3) sont connectées à une résistance CTN ou un dispositif VDR ou une diode.

12. Dispositif selon l'une des revendications précédentes, où l'élément en forme de disque (1) a une percée centrale (9) pour le passage à travers un arbre (17).

13. Un capot d'extrémité (16) pour un petit moteur électrique **caractérisé en ce que** dans le capot d'extrémité (16) y est monté un dispositif selon l'une des revendications précédentes.

14. Capot d'extrémité (16) selon la revendication 13, où l'élément en forme de disque (1) recouvre essentiellement une face d'extrémité intérieure (18) du capot d'extrémité (16).

15. Petit moteur électrique comprenant un carter qui est fermé avec le capot d'extrémité (16) selon l'une des revendications 13 ou 14.
